# EUROPEAN PATENT APPLICATION

(11) **EP 2 442 424 A1**
(43) Date of publication of application: **18.04.2012**
(21) Application number: 10786112.2
(22) Date of filing: 03.06.2010
(51) Int. Cl.: H02J 3/38, F24H 1/00, H01M 10/44, H02J 7/35, H02M 7/48

(54) **UTILITY INTERCONNECTION SYSTEM**

(30) Priority: 11.06.2009 JP 2009140406
(71) Applicant: Panasonic Corporation, Osaka 571-8501 (JP)
(72) Inventor: HONMA, Masaya, Kadoma-shi Osaka 571-8686 (JP); SHINAGAWA, Mikio, Kadoma-shi Osaka 571-8686 (JP)
(74) Representative: Appelt, Christian W.
(86) International application number: PCT/JP2010/059449
(87) International publication number: WO 2010/143581

(57) **Abstract**

A power distribution controller 50 comprises an electrical path switch 51 and a determining unit 52. The electrical path switch 51 comprises a first switch SW1 inserted between a solar cell 11 and a heating unit 62, and a second switch SW2 inserted between a commercial power system 20 and the heating unit 62. The determining unit 52 determines electrical paths of the electrical path switch 51, based on whether or not a surplus power is present in an electrical power generated in the solar cell 11. Then, the determining unit 52 controls to turn the second switch SW2 in the absence of the surplus power. The determining unit 52 controls to turn the first switch SW1 in the presence of the surplus power. In this way, when the surplus power is generated in the solar cell 11, the surplus power is used for driving the heating unit 62 of a water heater 60. Therefore, the surplus power of the solar cell 11 is stored as heat energy in a hot-water, which is stored in a hot-water tank 61. Therefore, the grid connected system can keep an increase in the cost of installation as low as possible and can use the surplus power of the solar cell effectively by means other than electric power selling.

## Description

### TECHNICAL FIELD

The invention relates generally to grid connected systems and, more particularly, to a grid connected system, which provides a power supply from a solar cell to various electrical equipments, and provides the power supply from a commercial power system to the various electrical equipments when an electrical power generated in the solar cell is insufficient.

### BACKGROUND ART

This kind of grid connected systems rapidly becomes widely used in average houses with recent widespread use of solar cells. In a general grid connected system, the solar cell sufficiently generates an electrical power in daylight, and thus the generated electrical power is more than a consumed power in daylight, and the grid connected system may have a surplus in the generated electrical power (hereinafter called a surplus power). In this case, the grid connected system can provide the surplus power to a commercial power system by reverse power flow, and thereby can sell the surplus power to an electrical power company (see Japanese Patent Application Laid-Open No. 2003-189477).

By the way, when a lot of consumers provide the surplus power to the commercial power system by the reverse power flow at the same time (electric power selling), the electrical power generated in the solar cell has a large influence on the commercial power system and the grid connected system potentially produces a problem, such as noise contamination. So, as described in the above Japanese Patent Application Laid-Open No. 2003-189477, it has been considered that the surplus power is stored in a rechargeable battery as means for effectively using the surplus power of the solar cell by means other than electric power selling.

However, when a rechargeable battery is installed in each consumer, the rechargeable battery substantially causes an increase in the cost to install the grid connected system. Therefore, there is a problem that the installation of the rechargeable battery leads to an increase in a burden on a consumer installing the grid connected system.

### DISCLOSURE OF THE INVENTION

It is an object of the present invention to provide a grid connected system, which can keep an increase in the cost of installation as low as possible and can use a surplus power of a solar cell effectively by means other than electric power selling.

A grid connected system of the present invention provides a power supply from a solar cell to electrical equipments, and provides the power supply from a commercial power system to said electrical equipments when an electrical power generated in said solar cell is insufficient. The grid connected system comprises a water heater, which comprises a hot-water tank and a heating unit and supplies a hot-water stored in said hot-water tank, and a power distribution controller, which controls feeding a power to said heating unit. Then, said water heater stores the hot-water in said hot-water tank, and said heating unit heats the hot-water stored in said hot-water tank. Then, said power distribution controller comprises an electrical path switch and a determining unit, and said electrical path switch is configured to switch electrical paths formed between said heating unit, said solar cell and said commercial power system, and said determining unit is configured to determine said electrical paths switched by said electrical path switch based on the presence or absence of a surplus power which is calculated by subtracting an electrical power consumed in said electrical equipments other than said water heater from an electrical power generated in said solar cell. Then, said determining unit determines said electrical paths so as to connect said commercial power system to said heating unit in the absence of the surplus power, and determines said electrical paths so as to connect said solar cell to said heating unit in the presence of the surplus power, and the surplus power is used for driving said heating unit and thereby the surplus power is stored as heat energy in said hot-water tank.

According to this invention, the grid connected system has the advantage that an increase in the cost of installation can be kept as low as possible and the surplus power of said solar cell can be used effectively by means other than electric power selling.

In this grid connected system, it's desirable that said determining unit causes said electrical path switch to form a path for reverse power flow from said solar cell to said commercial power system, when a volume of the hot-water, heated to more than or equal to a predetermined temperature, reaches a defined value in said hot-water tank and the surplus power of said solar cell is present.

In this grid connected system, it's desirable that the grid connected system further comprises a storage unit for storing an electrical power, and said determining unit causes said electrical path switch to form a charging path from said solar cell to said storage unit when a volume of the hot-water, heated to more than or equal to a predetermined temperature, reaches a defined value in said hot-water tank and the surplus power of said solar cell is present.

In this grid connected system, it's desirable that said heating unit is a heat pump system.

### BRIEF DESCRIPTION OF THE DRAWINGS

Fig. 1 is a schematic system configuration diagram showing a grid connected system according to an embodiment 1;
Fig. 2 is a flow chart showing operation of a power distribution controller of said grid connected system according to said embodiment 1;
Fig. 3 is an explanation diagram showing a simulation result of said grid connected system according to said embodiment 1;
Fig. 4 is a schematic block diagram showing a main section of a grid connected system according to an embodiment 2; and
Fig. 5 is a flow chart showing operation of a power distribution controller of said grid connected system according to said embodiment 2.

### BEST MODE FOR CARRYING OUT THE INVENTION

### (Embodiment 1)

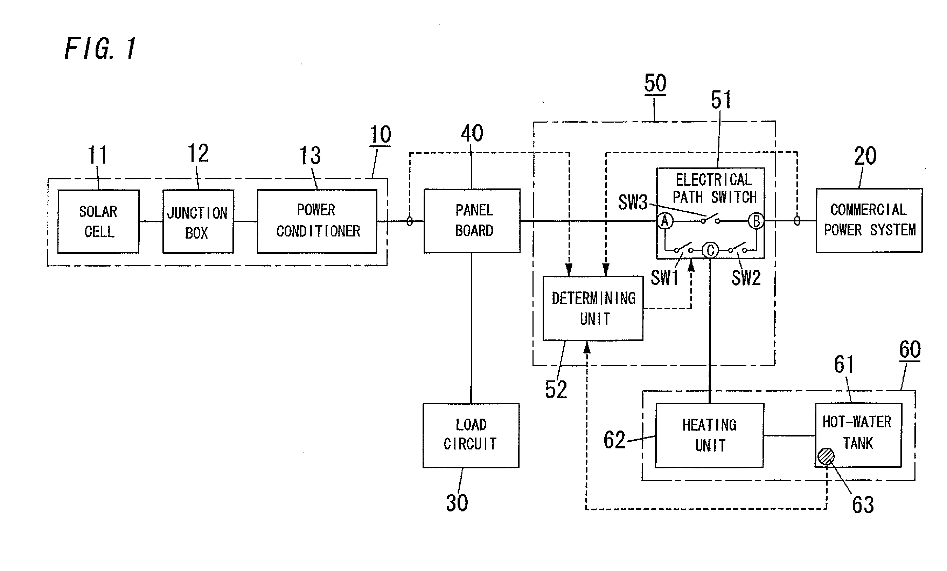

A grid connected system of the present embodiment, as shown in Fig. 1, drives a dispersed power source 10, mainly comprising a solar cell 11, and a commercial power system 20 by grid connected operation, and thereby provides a power supply to a load circuit 30 comprising a plurality of electrical equipments. Here, a grid connected system installed in a typical detached house is explained as an example. However, the grid connected system of the present embodiment can be installed in not only a detached house but also apartment buildings and establishments.

The dispersed power source 10 comprises a power conditioner 13, which is connected to the solar cell 11 through a junction box 12 collecting power, and converts a DC power generated in the solar cell 11 into an AC power via an inverter circuit in the power conditioner 13, and then outputs the converted AC power. Then, a panel board 40 is installed in the house and is connected to the load circuit 30. Then, the dispersed power source 10 (the power conditioner) is connected to the panel board 40. Thereby, output of the solar cell 11 is converted into an AC voltage, which is nearly equal to a voltage and a frequency of the commercial power system 20, and the AC voltage is provided to the load circuit 30 through the panel board 40.

The panel board 40 is also connected to the commercial power system 20 through a power distribution controller 50 described below. Then, when the grid connected system can not cover the electrical power consumed in the load circuit 30 by only the electrical power generated in the solar cell 11, the grid connected system makes a power supply from the commercial power system 20 to the load circuit 30 possible. In addition, in this grid connected system, it is necessary to prevent isolated operation of the dispersed power source 10 certainly in case of electrical power outage of the commercial power system 20. So, the grid connected system is provided with a protective device (not shown), and then the protective device stops operation of the power conditioner 13 and disconnects (opens) a disconnection relay inserted between the commercial power system 20 and the dispersed power source 10 when detecting the isolated operation of the dispersed power source 10.

By the way, in the present embodiment, a water heater 60 of a hot-water storage system is installed aside from the load circuit 30, and then comprises a hot-water tank 61 in which a hot-water is stored and supplies the hot-water. The water heater 60 is installed outside the house, and causes a heating unit 62 of a heat pump system to heat the hot-water stored in the hot-water tank 61.

Specifically, the hot-water tank 61 is provided in its bottom with a feed-water inlet, which is connected to a tap etc. and feeds a cold water to its inside, and is provided in its upper part with a discharge spout, which is connected to a hot-water pipe for supplying a hot-water and discharges the hot-water heated at a high-temperature. The hot-water in the hot-water tank 61 is transported from the bottom of the hot-water tank 61 to a heat exchanger located in the heating unit 62 through a flow pipe, and is returned from the upper part of the hot-water tank 61 to the inside of the hot-water tank 61 through a return pipe. The heating unit 62 brings heat in the atmosphere to a natural refrigerant (e.g., CO₂). The natural refrigerant is compressed with a compressor and thereby is raised to a high-temperature, and then heat of the natural refrigerant is transferred to the hot-water with the heat exchanger and thereby the hot-water is heated. A heat-insulated structure is adopted for the hot-water tank 61 in order to assemble the hot-water tank 61 into a structure that keeps heat of the hot-water in the hot-water tank 61.

For the above configuration, the inside of the hot-water tank 61 is constantly filled with the hot-water. Then, the feed-water inlet is installed in the bottom of the hot-water tank 61 and the hot-water heated in the heating unit 62 is returned from the upper part of the hot-water tank 61. Therefore, in the hot-water tank 61, the nearer the hot-water is to the upper part, the higher its temperature is. Here, a plurality of temperature sensors 63 are installed in a vertical direction within the hot-water tank 61. Thus, the water heater 60 can detect where the hot-water has a predetermined temperature (e.g., 90 degrees C) from the upper part to in the hot-water tank 61 through outputs of the temperature sensors 63, and can determine a volume of the hot-water stored in the hot-water tank 61. The water heater 60 determines that the hot-water comes to a boil, if the volume of the hot-water reaches a defined value in the hot-water tank 61. Then, the water heater 60 interrupts to provide a power supply to the compressor of the heating unit 62 and stops operation of the heating unit 62. In addition, the volume of the hot-water means an amount of a hot-water having more than or equal to a predetermined temperature of all hot-water stored in the hot-water tank 61.

Here, a power distribution controller 50 is located between the panel board 40 and the commercial power system 20 and controls feeding a power to the heating unit 62. Then, the power distribution controller 50 switches a partner, to which the heating unit 62 is connected, between the solar cell 11 and the commercial power system 20. Thereby, a power for driving the compressor of the heating unit 62 is provided from the solar cell 11 or the commercial power system 20.

The power distribution controller 50 comprises an electrical path switch 51, which comprises a first switch SW1, a second switch SW2 and a third switch SW3. The first switch SW1 is inserted between the panel board 40 and the heating unit 62 (between points A and C shown in Fig. 1). The second switch SW2 is inserted between the commercial power system 20 and the heating unit 62 (between points B and C). The third switch SW3 is inserted between the panel board 40 and the commercial power system 20 (between points A and B). Also, the power distribution controller 50 comprises a determining unit 52, which is configured to determine electrical paths formed in the electrical path switch 51 based on whether or not the surplus power is present in the power produced by the solar cell 11 and based on whether or not the volume of the hot-water reaches the defined value in the hot-water tank 61. In addition, each of the switches SW1 to SW3 comprises a relay etc.

The determining unit 52, for example, detects a potential difference between the dispersed power source 10 and the commercial power system 20, and determines the presence or absence of the surplus power of the solar cell 11 based on the potential difference. Then, the determining unit 52 receives detection results from the plurality of temperature sensors 63 installed within the hot-water tank 61, and then determines that the hot-water comes to a boil, if the volume of the hot-water reaches a defined value in the hot-water tank 61. In contrast, the determining unit 52 determines the hot-water does not come to a boil, if the volume does not reach the defined value. Here, the defined value can be set arbitrarily by a user via a controller (not shown) of the water heater 60.

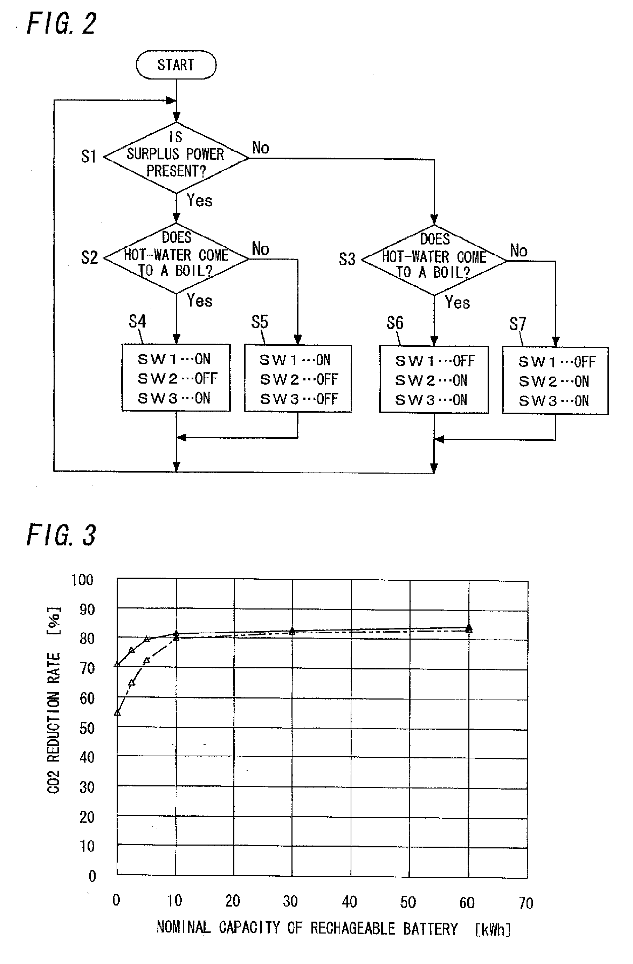

The determining unit 52 has a function for controlling on/off of the switches SW1 to SW3 of the electrical path switch 51 individually. Then, as shown in Fig. 2, on/off states of the switches SW1 to SW3 are determined based on the presence or absence of the surplus power and based on whether or not the hot-water comes to a boil.

Namely, when the determining unit 52 determines that the surplus power is present (S1: Yes) and that the hot-water does not come to a boil (S2: No), the determining unit 52 controls to turn only the first switch SW1 on and forms an electrical path connecting points A and C shown in Fig. 1 and controls to turn the remaining second and third switches SW2, SW3 off (S5). Therefore, the heating unit 62 is disconnected from the commercial power system 20 and is driven with the surplus power of the solar cell 11.

On the other hand, when the determining unit 52 determines that the surplus power is absent (S1: No) and that the hot-water does not come to a boil (S3: No), the determining unit 52 controls to turn the first switch SW1 off and to turn the remaining second and third switches SW2, SW3 on and forms an electrical path connecting points B and C and an electrical path connecting points A and B shown in Fig. 1 (S7). Thus, the heating unit 62 is connected to the commercial power system 20 and is driven with the power supply provided from the commercial power system 20. Furthermore, the electrical path, for providing the power supply from the commercial power system 20 to the load circuit 30, is formed between the panel board 40 and the commercial power system 20 by on operation of the third switch SW3. Therefore, the power shortage of the solar cell 11 can be covered by the power of the commercial power system 20.

Then, when the determining unit 52 determines that the surplus power is present (S1: Yes) and that the hot-water comes to a boil (S2: Yes), the determining unit 52 controls to turn the second switch SW2 off and to turn the remaining first and third switches SW1, SW3 on and forms an electrical path connecting points A and C and an electrical path connecting points A and B shown in Fig. 1 (S4). That is, the electrical path, for the reverse power flow from the solar cell 11 to the commercial power system 20, is formed between the panel board 40 and the commercial power system 20 by on operation of the third switch SW3. Therefore, the surplus power of the solar cell 11 can be provided to the commercial power system 20 by the reverse power flow. Here, although the heating unit 62 is connected to the solar cell 11, the water heater 60 stops operation of the heating unit 62 at the time of boiling, as described above. Thus, over-boiling of the hot-water can be prevented.

Then, when the determining unit 52 determines that the surplus power is absent (S1: No) and that the hot-water comes to a boil (S3: Yes), the determining unit 52 controls to turn the first switch SW1 off and to turn the remaining second and third switches SW2, SW3 on and forms an electrical path connecting points B and C and an electrical path connecting points A and B shown in Fig. 1 (S6). That is, the electrical path, for providing the power supply from the commercial power system 20 to the load circuit 30, is formed between the panel board 40 and the commercial power system 20 by on operation of the third switch SW3. Therefore, the power shortage of the solar cell 11 can be covered by the power of the commercial power system 20. Here, although the heating unit 62 is connected to the commercial power system 20, the water heater 60 stops operation of the heating unit 62 at the time of boiling, as described above. Thus, over-boiling of the hot-water can be prevented.

In the above-mentioned configuration, the electrical power generated in the solar cell 11 is provided to the load circuit 30 in principle, and the surplus power is used for driving the heating unit 62 of the water heater 60 when the surplus power is produced. As a result, surplus electrical energy (the surplus power) generated in the solar cell 11 is stored as heat energy in the hot-water which is stored in the hot-water tank 61. Here, in houses of consumers, the electrical and heat energies are required, and also the water heater 60 is required equipment which is installed regardless of efficient use of the surplus power. Thus, the grid connected system can keep an increase in the cost of installation low, compared with a case where a rechargeable battery is added.

Then, at the time of boiling, the power for driving the compressor of the heating unit 62 is not needed regardless of the presence or absence of the surplus power generated in the solar cell 11. Therefore, when the surplus power is generated in the solar cell 11, a part of the surplus power is left without being consumed in the heating unit 62. So, in the present embodiment, such an unconsumed surplus of the surplus power is effectively used by reverse power flow to the commercial power system 20 for electrical power selling in a state of the above step S4. However, the surplus power of the solar cell 11 is consistently used for driving the heating unit 62 preferentially. Then, the unconsumed surplus is just sold exceptionally only in a case in which a part of the surplus power is left without being consumed. Thus, the grid connected system can prevent occurrence of a situation where a lot of consumers provide the surplus power to the commercial power system 20 by the reverse power flow at the same time, and can keep so that the electrical power generated in the solar cell 11 has a small influence on the commercial power system 20.

In summary, in the present embodiment, the surplus power of the solar cell 11 is used for heating the hot-water stored in the hot-water tank 61, and thereby the surplus power (the electrical energy) is converted into the heat energy to be stored. As a result, the hot-water in the hot-water tank 61 is provided to the whole house, and thereby the heat energy can be used effectively. Thus, just like the surplus power is stored in a rechargeable battery while remaining the electrical energy, the surplus power can be used effectively without electric power selling.

Then, even in the time when the power supply from the solar cell 11 is disrupted, such as in the night, the commercial power system 20 provides the power supply to the heating unit 62. In this way, the hot-water can be heated in the hot-water tank 61, and then a shortage of the hot-water can be avoided.

When the surplus power of the solar cell 11 is used for driving the heating unit 62 as described above, it is found that there is a CO₂ reduction effect, according to the simulation result shown in Fig. 3. In the Fig. 3, its horizontal axis shows a nominal capacity (kWh) of a rechargeable battery used in the grid connected system, and its vertical axis shows a CO₂ reduction rate (%). Then, a solid line in Fig. 3 shows a simulation result in a case where the surplus power is used for driving the heating unit 62, and a long dashed double-short dashed line shows a simulation result in a case where the surplus power is not used. In addition, these simulation results are subject to the condition that the surplus power is not sold. According to these simulation results, when the rechargeable battery is not used (that is, the nominal capacity = 0 kWh), the simulation result in the case where the surplus power is used for driving the heating unit 62 shows about 16% improvement of CO₂ reduction rate, compared with the simulation result in the case where the surplus power is not used for driving. Thus, despite no use of the rechargeable battery, the configuration of the present embodiment can achieve the CO₂ reduction effect (70%), which is equal to that in a case where the rechargeable battery of about 4 kWh is used.

In addition, in Fig. 3, it is assumed that almost all of the surplus power of the solar cell 11 can be stored with use of the rechargeable battery having the nominal capacity of about 10 kWh. Thus, it is found that there is no large difference in the CO₂ reduction effect when the nominal capacity of the rechargeable battery is more than or equal to 10 kWh. However, it is found that, even more than or equal to 10 kWh, there is a small increase in the CO₂ reduction rate. This is attributed to the fact that an instantaneous force at the time of discharge (discharge magnitude per unit time) increases with an increase in the capacity of the rechargeable battery.

Then, when the water heater 60 comprises the heating unit 62 which is a heat pump system like the present embodiment, driving of the heating unit 62 with the surplus power of the solar cell 11 is effective in aspects of the operating efficiency of the water heater 60 as well. That is, the surplus power of the solar cell 11 is usually generated in the daytime when there is an increase in an electric-generating capacity of the solar cell 11, and thus the heating unit 62 driven with the surplus power also runs most often in the daytime. Here, the higher ambient temperature is, the higher efficiency the heating unit 62 of the heat pump system can run with. Therefore, the operating efficiency of the water heater 60 can be improved by running the heating unit 62 in the daytime when ambient temperature is high, compared with running of the heating unit 62 in the time when ambient temperature is low, such as in the night.

In addition, in the present embodiment, it is shown that the electrical path switch 51 is provided with the first, second and third switches SW1 to SW3 individually as an example. However, the electrical path switch 51 is not limited to only the configuration of this example, and may have other configuration if configured to switch electrical paths between points A, B and C shown in Fig. 1. For example, both of the first and second switches SW1, SW2 are not turned on or off at the same time, and thus these switches SW1, SW2 may be achieved with one switch.

### (Embodiment 2)

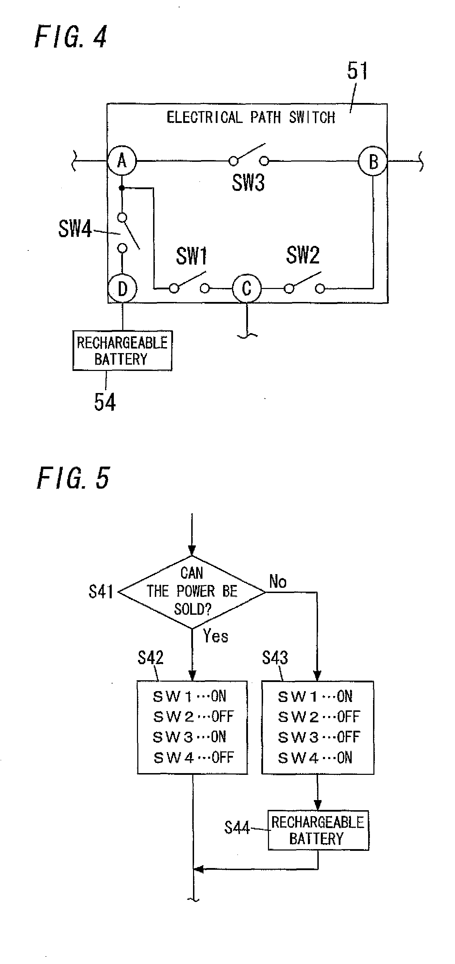

As shown in Fig. 4, the grid connected system of the present embodiment is different from the grid connected system of the embodiment 1 in that a rechargeable battery (storage unit) 54 is located and then the unconsumed surplus of the surplus power generated in the solar cell 11 is stored in the rechargeable battery 54 instead of being sold at the time of boiling.

Here, when the grid connected system is permitted to sell the power to an electrical power company and a part of the surplus power is left as the unconsumed surplus, the unconsumed surplus is provided to the commercial power system 20 by reverse power flow for selling, and thus can be used effectively, as explained in the embodiment 1. However, the grid connected system is not always permitted to sell the power to the electrical power company For example, when the commercial power system 20 loses power or the electrical power company rejects the reverse power flow due to any reason, the grid connected system is not permitted to sell the power to the electrical power company, and thus the unconsumed surplus of the surplus power can not be used effectively by mean of electrical power selling. So, in the present embodiment, when the grid connected system is not permitted to sell the power and a part of the surplus power of the solar cell 11 is left as the unconsumed surplus, the unconsumed surplus is used effectively by being stored in the rechargeable battery 54.

Specifically, the determining unit 52 has a function for determining whether or not the grid connected system is permitted to sell the power by detecting an abnormality, such as electrical power outage of the commercial power system 20. The electrical path switch 51 further comprises a fourth switch SW4, which is inserted between the panel board 40 and the rechargeable battery 54 (between points A and D shown in Fig. 4). Then, on/off operation of the fourth switch SW4 is determined by the determining unit 52 as explained below.

Namely, in the present embodiment, a processing shown in Fig. 5 is adopted instead of the processing of step S4 shown in the flow chart of Fig. 2. In short, when the determining unit 52 determines that the surplus power is present and the hot-water comes to a boil and further the grid connected system is permitted to sell the power (S41: Yes), the determining unit 52 controls to turn the first and third switches SW1, SW3 on and to turn the remaining second and fourth switches SW2, SW4 off (S42). At this time, the electrical path switch 51 forms an electrical path connecting points A and C, and an electrical path connecting points A and B shown in Fig. 4. That is, a path for reverse power flow from the solar cell 11 to the commercial power system 20 is formed between the panel board 40 and the commercial power system 20 by on operation of the third switch SW3. Therefore, the surplus power of the solar cell 11 can be provided to the commercial power system 20 by reverse power flow.

On the other hand, when the determining unit 52 determines that the surplus power is present and the hot-water comes to a boil and further the grid connected system is not permitted to sell the power (541: No), the determining unit 52 controls to turn the first and fourth switches SW1, SW4 on and to turn the remaining second and third switches SW2, SW3 off (S43). At this time, the electrical path switch 51 forms an electrical path connecting points A and C, and an electrical path connecting points A and D shown in Fig. 4. That is, a path for charging from the solar cell 11 to the rechargeable battery 54 is formed between the panel board 40 and the rechargeable battery 54 by on operation of the fourth switch SW4. Therefore, the rechargeable battery 54 can be charged with the surplus power of the solar cell 11 (S44).

According to the configuration explained above, even if the hot-water comes to a boil and a part of the surplus power of the solar cell 11 is left as the unconsumed surplus, the unconsumed surplus can be used effectively by being stored as electrical energy in the rechargeable battery 54. Even in this case, the surplus power of the solar cell 11 is consistently used for driving the heating unit 62 preferentially, and then the unconsumed surplus is just stored exceptionally only in a case in which a part of the surplus power is left as the unconsumed surplus and the grid connected system is not permitted to sell the power. As a result, the rechargeable battery 54 may have a relatively-low capacity, and use of such a rechargeable battery 54 can keep an increase in the cost to install the grid connected system low.

Other configuration and function are the same as the embodiment 1.

## Claims

1. A grid connected system, providing a power supply from a solar cell to electrical equipments, providing the power supply from a commercial power system to said electrical equipments when an electrical power generated in said solar cell is insufficient,
wherein the grid connected system comprises:
a water heater comprising a hot-water tank and a heating unit, and supplying a hot-water stored in said hot-water tank; and
a power distribution controller controlling feeding a power to said heating unit,
wherein said water heater stores the hot-water in said hot-water tank, and said heating unit heats the hot-water stored in said hot-water tank,
wherein said power distribution controller comprises an electrical path switch and a determining unit, said electrical path switch being configured to switch electrical paths formed between said heating unit, said solar cell and said commercial power system, said determining unit being configured to determine said electrical paths switched by said electrical path switch based on the presence or absence of a surplus power which is calculated by subtracting an electrical power consumed in said electrical equipments other than said water heater from an electrical power generated in said solar cell,
wherein said determining unit determines said electrical paths so as to connect said commercial power system to said heating unit in the absence of the surplus power, and determines said electrical paths so as to connect said solar cell to said heating unit in the presence of the surplus power, and the surplus power is used for driving said heating unit and thereby the surplus power is stored as heat energy in said hot-water tank.

2. The grid connected system as claimed in claim 1,
wherein said determining unit causes said electrical path switch to form a path for reverse power flow from said solar cell to said commercial power system, when a volume of the hot-water, heated to more than or equal to a predetermined temperature, reaches a defined value in said hot-water tank and the surplus power of said solar cell is present.

3. The grid connected system as claimed in claim 1, further comprising a storage unit for storing an electrical power,
wherein said determining unit causes said electrical path switch to form a charging path from said solar cell to said storage unit when a volume of the hot-water, heated to more than or equal to a predetermined temperature, reaches a defined value in said hot-water tank and the surplus power of said solar cell is present.

4. The grid connected system as claimed in any one of claims 1-3,
wherein said heating unit is a heat pump system.
